# EUROPEAN PATENT APPLICATION

(11) **EP 4 835 910 A1**
(43) Date of publication of application: **04.11.2026**
(21) Application number: 24914882.6
(22) Date of filing: 06.09.2024
(51) Int. Cl.: G21C 17/017, F22B 35/18, G06F 113/08

(54) **OPERATION AND MAINTENANCE ASSISTING METHOD AND SYSTEM FOR HEAT TRANSFER TUBE BUNDLE OF STEAM GENERATOR, AND MEDIUM AND DEVICE**

(30) Priority: 03.01.2024 CN 202410010047
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN)
(72) Inventor: QIU, Guihui, Shenzhen, Guangdong 518124 (CN); DUAN, Yuangang, Shenzhen, Guangdong 518124 (CN); RAN, Xiaobing, Shenzhen, Guangdong 518124 (CN); REN, Hongbing, Shenzhen, Guangdong 518124 (CN); JIANG, Feng, Shenzhen, Guangdong 518124 (CN); ZHANG, Kaige, Shenzhen, Guangdong 518124 (CN); ZHAO, Yanbo, Shenzhen, Guangdong 518124 (CN); ZHU, Yong, Shenzhen, Guangdong 518124 (CN); ZHOU, Peng, Shenzhen, Guangdong 518124 (CN)
(74) Representative: Westphal, Mussgnug & Partner, Patentanwälte mbB
(86) International application number: PCT/CN2024/117609
(87) International publication number: WO 2025/145660

(57) **Abstract**

An operation and maintenance assisting method and system for heat transfer tubes of a steam generator, and a medium and a device. The operation and maintenance assisting method for heat transfer tubes of a steam generator comprises the following steps: acquiring actual measurement data of inlet and outlet connecting tubes on a primary side and a secondary side of a steam generator (S10); on the basis of the actual measurement data, simulating the internal operation condition of the steam generator, so as to obtain simulation parameters of a tube bundle area of the steam generator (S20); on the basis of a micro-vibration wear analysis model and on the basis of the simulation parameters, performing micro-vibration wear analysis on each heat transfer tube, so as to obtain the current wear depth of each heat transfer tube (S30); and on the basis of the current wear depth, calculating a predicted wear depth of each heat transfer tube that corresponds to at least one target time point (S40). By means of analyzing the micro-vibration wear of all heat transfer tubes in a steam generator and predictively giving the corresponding wear depths of each heat transfer tube at different target time points, a service behavior of each heat transfer tube can be tracked and the service life of each heat transfer tube can be predicted.

## Description

### TECHNICAL FIELD

The present application relates to the technical field of nuclear power plant steam generators, and in particular to a method, system, medium, and device for assisting operation and maintenance of heat transfer tubes of a steam generator.

### BACKGROUND

A steam generator is a key component in a pressurized water reactor nuclear power system that connects the primary circuit and the secondary circuit, and performs important heat and mass transfer functions. A coolant from the reactor core transfers heat to a secondary side working fluid through heat transfer tubes, thereby generating steam. The primary side coolant is characterized by high temperature, high pressure, and radioactivity; the secondary side working fluid undergoes single-phase convective heat transfer and boiling heat transfer inside the steam generator, and is converted into steam to drive a steam turbine for power generation.

During operation of the steam generator, complex physical processes occur inside the equipment, and the operating environment is harsh, posing significant challenges to all components of the steam generator. Among them, U-shaped heat transfer tubes are one of the most important components. The fluid inside the tubes is a radioactive coolant, while the fluid outside the tubes is water and steam, and the tubes operate under a multiphysics coupled environment involving heat transfer, fluid flow, and vibration. There are tens of thousands of heat transfer tubes in a steam generator, which must be fixed and supported by solid structures such as support plates and anti-vibration bars. The heat exchange between the internal and external fluids is strongly coupled, and the external flow may be either perpendicular or parallel to the tube bundle. The heat transfer tube bundle accounts for more than 85% of the primary circuit boundary area, while the tube wall thickness is only about 1 mm, making it the weakest part of the primary circuit. Its reliability and integrity are directly related to the normal operation of the nuclear steam supply system. Once failure occurs, it may cause significant economic losses and nuclear safety risks. From 1993 to 2012, among 235 nuclear power plants in operation, 138 experienced shutdowns due to heat transfer tube defects, accounting for 58.7%, making it the primary cause of unplanned shutdowns in nuclear power plants. Under the excitation of two-phase flow on the secondary side of the steam generator, the heat transfer tubes are subjected to forced vibration, leading to contact wear between the heat transfer tubes and support structures such as support plates and anti-vibration bars. Therefore, fretting wear between the heat transfer tubes and supporting structures is the main cause of heat transfer tube defects.

However, since steam generators operate in high-temperature, high-pressure, and closed environments, with extremely complex internal structures, the sensor monitoring signals available for in-service steam generators in nuclear power plants are very limited. The health condition of heat transfer tubes can be assessed during periodic outages through eddy current non-destructive testing.

Furthermore, in related technologies, only about ten representative heat transfer tubes are typically selected during the design and analysis stage for analysis, and a conservative envelope-based approach is adopted for structural and thermal design. This makes it impossible to track the service behavior of each individual heat transfer tube or to predict its remaining life. Moreover, there is currently no solution capable of accurately predicting the health condition of heat transfer tubes.

### SUMMARY OF THE INVENTION

The present application aims to solve the technical problem of providing a method, system, medium, and device for assisting operation and maintenance of heat transfer tubes of a steam generator.

The technical solution adopted by the present application to solve the above technical problem is as follows: a method for assisting operation and maintenance of heat transfer tubes of a steam generator, comprising the following steps:
S10, acquiring actual measurement data of inlet and outlet nozzles on primary side and secondary side of a steam generator;
S20, simulating the internal operating conditions of the steam generator based on the actual measurement data to obtain simulated parameters for a tube bundle region of the steam generator;
S30, performing fretting wear analysis on each heat transfer tube based on the simulated parameters using a fretting wear analysis model to obtain a current wear depth of each heat transfer tube; and
S40, calculating, based on the current wear depth, a predicted wear depth of each heat transfer tube at at least one target time point.

Further, in the method for assisting operation and maintenance of heat transfer tubes of a steam generator according to the present application, after step S20 and before step S30, the method further comprises:
S50, performing three-dimensional thermal-hydraulic analysis based on the simulated parameters to obtain fluid parameters of each heat transfer tube in the tube bundle region of the steam generator;
step S30 comprises:
   performing fretting wear analysis on each heat transfer tube based on the fluid parameters using the fretting wear analysis model to obtain the current wear depth of each heat transfer tube.

Further, in the method for assisting operation and maintenance of heat transfer tubes of a steam generator according to the present application, after step S30, the method further comprises:
S60, acquiring the actual wear depth of the heat transfer tubes of the steam generator obtained by eddy current testing during nuclear power plant refueling outages, comparing the actual wear depth with the current wear depth, and verifying a feasibility of the fretting wear analysis model according to a comparison result.

Further, in the method for assisting operation and maintenance of heat transfer tubes of a steam generator according to the present application, step S30 further comprises:
presetting a fretting wear analysis model for each heat transfer tube, and performing fretting wear analysis on the corresponding heat transfer tube according to the fluid parameters of each heat transfer tube, to obtain the current wear depth of each heat transfer tube.

Further, in the method for assisting operation and maintenance of heat transfer tubes of a steam generator according to the present application, step S60 further comprises:
when the comparison result exceeds a preset deviation range, adjusting configuration parameters of the fretting wear analysis model and re-executing step S30 until the comparison result falls within the preset deviation range, whereupon adjustment of the configuration parameters is stopped.

Further, in the method for assisting operation and maintenance of heat transfer tubes of a steam generator according to the present application, the configuration parameters comprise at least one of a tube support boundary condition, an added mass, and a damping ratio of the heat transfer tube, wherein the boundary condition comprise a support state value and/or a gap value of the heat transfer tube.

Further, in the method for assisting operation and maintenance of heat transfer tubes of a steam generator according to the present application, step S30 further comprises:
performing dynamic characteristic modeling analysis on the heat transfer tubes according to a geometric structure, a material property and the support positions of a support plate and an anti-vibration bar of each heat transfer tube, to obtain dynamic characteristics of each heat transfer tube; and performing fretting wear analysis on each heat transfer tube based on the dynamic characteristics and the fluid parameters using the fretting wear analysis model to obtain the current wear depth of each heat transfer tube;
wherein the dynamic characteristics comprise a vibration frequency and/or a vibration mode shape.

Further, in the method for assisting operation and maintenance of heat transfer tubes of a steam generator according to the present application, the method further comprises:
S70, performing fluid-elastic instability analysis on each heat transfer tube according to the fluid parameters using a fluid-elastic instability analysis model, to obtain and display a fluid-elastic instability ratio, a vibration stress, and/or a vibration displacement of each heat transfer tube.

Further, in the method for assisting operation and maintenance of heat transfer tubes of a steam generator according to the present application, step S50 comprises:
according to the simulated parameters, performing, in the three-dimensional thermal-hydraulic analysis model, mass conservation, momentum conservation, and energy conservation calculations for the secondary side of the tube bundle region, and performing an energy conservation calculation for the primary side of the tube bundle region, to obtain a heat transfer between the primary side and the secondary side through a surface of the heat transfer tubes; and calculating, according to the heat transfer and in combination with a position of each heat transfer tube, the fluid parameters of each heat transfer tube along a tube length direction in the tube bundle region of the steam generator;

wherein the fluid parameters comprise a fluid velocity and/or a fluid density.

Further, in the method for assisting operation and maintenance of heat transfer tubes of a steam generator according to the present application, step S20 comprises:
performing a real-time simulation of the internal operating conditions of the steam generator according to the actual measurement data to obtain simulated parameters for the tube bundle region of the steam generator;
wherein the actual measurement data comprise at least one of a flow rate, an pressure, and a temperature of the inlet and outlet nozzles on the primary side and the secondary side of the steam generator; the simulated parameters comprise at least one of a flow rate at a bottom inlet of the tube bundle region, an enthalpy at the bottom inlet of the tube bundle region, a temperature at the bottom inlet of the tube bundle region, an outlet pressure of a shroud top cover, an inlet temperature of the primary side of the heat transfer tube, and a flow rate of the primary side of the heat transfer tube; and the tube bundle region is a region enclosed by a secondary side surface of a tube sheet, a shroud, and the shroud top cover, the region including the heat transfer tubes, support plates, and anti-vibration bars.

Further, in the method for assisting operation and maintenance of heat transfer tubes of a steam generator according to the present application, the method further comprises:
S80, visually displaying the current wear depth and/or the predicted wear depth.

Further, in the method for assisting operation and maintenance of heat transfer tubes of a steam generator according to the present application, the method further comprises:
S90, monitoring the current wear depth of each heat transfer tube, and issuing a fault warning when the current wear depth exceeds a preset threshold.

Additionally, the present application further provides a system for assisting operation and maintenance of heat transfer tubes of a steam generator, comprising:
an acquisition unit configured to acquire actual measurement data of inlet and outlet nozzles on a primary side and a secondary side of a steam generator;
a simulation unit configured to simulate the internal operating conditions of the steam generator according to the actual measurement data to obtain simulated parameters for the tube bundle region of the steam generator;
an analysis unit configured to perform fretting wear analysis on each heat transfer tube based on the simulated parameters using a fretting wear analysis model, thereby obtaining the current wear depth of each heat transfer tube; and
a prediction unit configured to calculate, based on the current wear depth, the predicted wear depth of each heat transfer tube at at least one target time point.

Additionally, the present application further provides a computer-readable storage medium, characterized in that the computer-readable storage medium stores a computer program, the computer program being adapted to be loaded by a processor to perform the steps of the method for assisting operation and maintenance of heat transfer tubes of a steam generator according to the above.

Additionally, the present application further provides a computer device, characterized by comprising a memory and a processor, wherein the memory stores a computer program, and the processor is configured to execute, by invoking the computer program stored in the memory, the steps of the method for assisting operation and maintenance of heat transfer tubes of a steam generator according to the above.

Implementing the method, system, medium and device for assisting operation and maintenance of heat transfer tubes of a steam generator according to the present application brings at least the following beneficial effects: by analyzing the fretting wear of all heat transfer tubes inside the steam generator, the present application predictively provides the wear depth of each heat transfer tube corresponding to different target time points, so that service behavior tracking and remaining life prediction can be realized for each heat transfer tube.

### BRIEF DESCRIPTION OF THE DRAWINGS

The present application will be described in further detail below with reference to the accompanying drawings and embodiments, in which:
FIG. 1 is a schematic flowchart of a method for assisting operation and maintenance of heat transfer tubes of a steam generator according to one embodiment of the present application;
FIG. 2 is a schematic flowchart of a method for assisting operation and maintenance of heat transfer tubes of a steam generator according to some embodiments of the present application;
FIG. 3 is a schematic flowchart of a method for assisting operation and maintenance of heat transfer tubes of a steam generator according to some embodiments of the present application;
FIG. 4 is a schematic flowchart of a method for assisting operation and maintenance of heat transfer tubes of a steam generator according to some embodiments of the present application;
FIG. 5 is a schematic flowchart of a method for assisting operation and maintenance of heat transfer tubes of a steam generator according to some embodiments of the present application;
FIG. 6 is a schematic flowchart of a method for assisting operation and maintenance of heat transfer tubes of a steam generator according to some embodiments of the present application;
FIG. 7 is a structural schematic diagram of a system for assisting operation and maintenance of heat transfer tubes of a steam generator according to one embodiment of the present application.

### DETAILED DESCRIPTION

For a clearer understanding of the technical features, objectives and effects of the present application, specific embodiments of the present application will now be described in detail with reference to the accompanying drawings.

In the following description, specific details such as particular system architectures and technologies are set forth for the purpose of illustration rather than limitation, so as to thoroughly understand the embodiments of the present application. It will be apparent, however, to those skilled in the art that the present application may be practiced in other embodiments without these specific details. In other instances, detailed descriptions of well-known systems, apparatuses, circuits and methods are omitted so as not to obscure the description of the present application with unnecessary particulars.

For ease of understanding the present application, a more comprehensive description thereof is provided hereinafter. The present application may be embodied in many different forms and is not limited to the embodiments set forth herein. On the contrary, these embodiments are provided so that the disclosure of the present application will be thorough and complete.

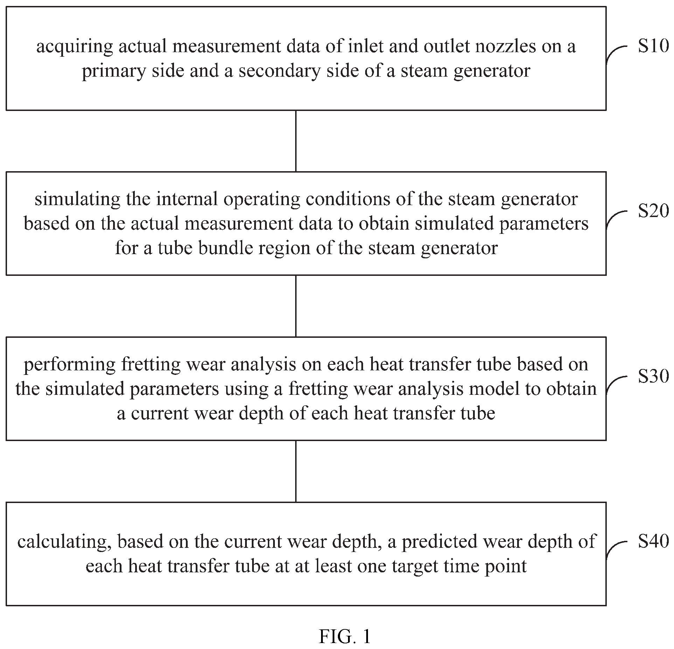

In a preferred embodiment, with reference to FIG. 1, the method for assisting operation and maintenance of heat transfer tubes of a steam generator according to the present application comprises the following steps:
S10, acquiring actual measurement data of inlet and outlet nozzles on a primary side and a secondary side of a steam generator. Specifically, the actual measurement data include, but are not limited to, real-time parameters such as flow rate, pressure, temperature, etc. of the inlet and outlet nozzles on the primary side and the secondary side of the steam generator.
S20, simulating internal operating conditions of the steam generator based on the actual measurement data to obtain simulated parameters for the tube bundle region of the steam generator. It should be noted that the tube bundle region is a region enclosed by a secondary side surface of a tube sheet, a shroud, and a shroud top cover, and the region includes heat transfer tubes, support plates, anti-vibration bars, and other components.

It can be understood that, in this embodiment, a one-dimensional transient thermal-hydraulic analysis of the steam generator is performed based on a preset steam generator transient analysis theoretical model, so as to obtain the simulated parameters for the tube bundle region of the steam generator. Specifically, real-time parameters such as flow rate, pressure, temperature, etc. of the inlet and outlet nozzles on the primary side and the secondary side of the steam generator are input into the steam generator transient analysis theoretical model, so as to simulate in real time the internal operating conditions of the steam generator. Through analysis, simulated parameters such as a flow rate, enthalpy, temperature at a bottom inlet of the tube bundle region, an outlet pressure of a shroud top cover, a primary-side inlet temperature of the heat transfer tubes, and a primary-side coolant flow rate of the heat transfer tubes are obtained.

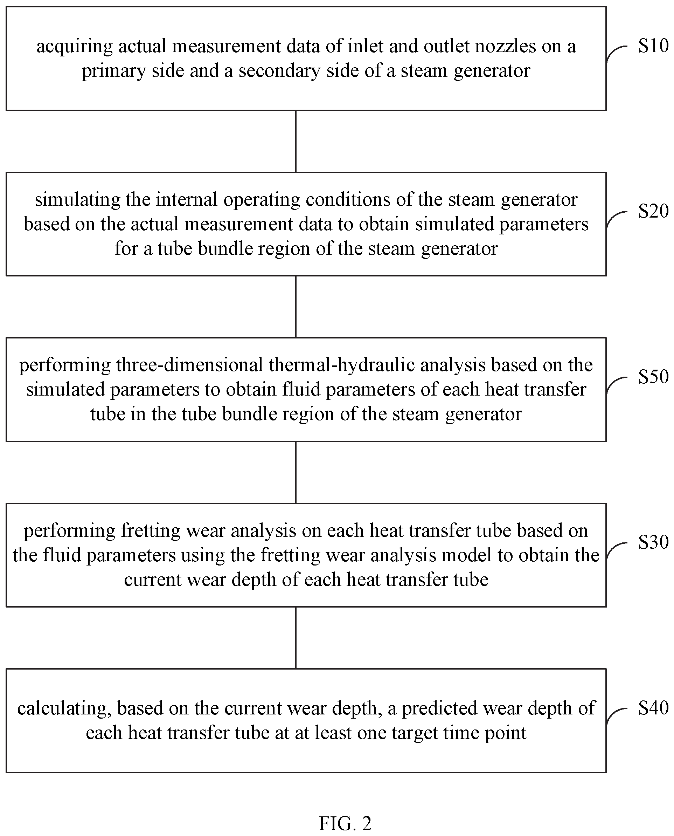

Preferably, with reference to FIG. 2, after step S20 and before step S30, the method further comprises:
S50, performing three-dimensional thermal-hydraulic analysis based on the simulated parameters, to obtain fluid parameters of each heat transfer tube in the tube bundle region of the steam generator.

It can be understood that, in this embodiment, a three-dimensional thermal-hydraulic analysis for the tube bundle region of the steam generator is performed using a preset three-dimensional thermal-hydraulic analysis model, so as to obtain fluid parameters such as fluid velocity and fluid density along a tube length direction of each heat transfer tube. Specifically, in the three-dimensional thermal-hydraulic analysis model, according to the simulated parameters, mass conservation, momentum conservation, and energy conservation calculations are performed for the secondary side of the tube bundle region, and energy conservation calculation is performed for the primary side of the tube bundle region, so as to obtain heat transfer between the primary side and the secondary side through a surface of the heat transfer tubes. According to the heat transfer and in combination with a position of each heat transfer tube, fluid parameters of each heat transfer tube along the tube length direction in the tube bundle region of the steam generator are calculated.

It should be noted that, in order to obtain more accurate fluid parameters, the fluid velocity and fluid density conditions at the position of each heat transfer tube are determined by the position of the heat transfer tube. For example, structures such as tube bundles and tie rods on the secondary side are considered by a distributed resistance method, and since support structures such as support plates and anti-vibration bars have good fluid permeability, they are considered by a lumped resistance method in the three-dimensional thermal-hydraulic analysis model.

S30, performing, based on the simulated parameters, fretting wear analysis on each heat transfer tube using a fretting wear analysis model, to obtain the current wear depth of each heat transfer tube.

It can be understood that, in this embodiment, after obtaining the fluid parameters of each heat transfer tube based on the simulated parameters, the calculated fluid parameters such as fluid velocity and fluid density along the tube length direction of each heat transfer tube are used as input parameters of a preset fretting wear analysis model for heat transfer tubes, and fretting wear analysis is performed, thereby obtaining the current wear depth of each heat transfer tube.

Specifically, in some embodiments, step S30 comprises: presetting a fretting wear analysis model for each heat transfer tube, and performing fretting wear analysis on the heat transfer tube according to the fluid parameters of the heat transfer tube, to obtain the current wear depth of each heat transfer tube. In this embodiment, a fretting wear analysis model is individually established for each heat transfer tube.

As an alternative, in some embodiments, step S30 further comprises: performing dynamic characteristic modeling analysis on the heat transfer tubes according to geometric structure, material properties, and support positions of tube support plates and anti-vibration bars of each heat transfer tube, thereby obtaining dynamic characteristics of each heat transfer tube; and based on the fretting wear analysis model, performing fretting wear analysis on each heat transfer tube according to the dynamic characteristics and the fluid parameters, thereby obtaining the current wear depth of each heat transfer tube. Wherein the dynamic characteristics include vibration frequency and vibration mode shape, etc. That is, before performing fretting wear analysis, dynamic characteristic analysis is first performed on each heat transfer tube to obtain intrinsic characteristics of the heat transfer tube such as vibration frequency and vibration mode shape.

S40, calculating, based on the current wear depth, a predicted wear depth corresponding to at least one target time point of each heat transfer tube. It can be understood that the system can determine, based on the current wear depth and the in-service time of the current heat transfer tube, the predicted wear depth corresponding to other future time points from a pre-established wear law curve, for example, predicting fretting wear depth at 5 years, 10 years, 30 years, 60 years, etc.

In this embodiment, an envelope-based design analysis model is no longer adopted. Instead, by analyzing fretting wear of all heat transfer tubes in the steam generator, the present application predictively provides the wear depth of each heat transfer tube at different target time points, thereby enabling tracking of the service behavior of each heat transfer tube and remaining life prediction, and further enabling real-time monitor the health status of each heat transfer tube.

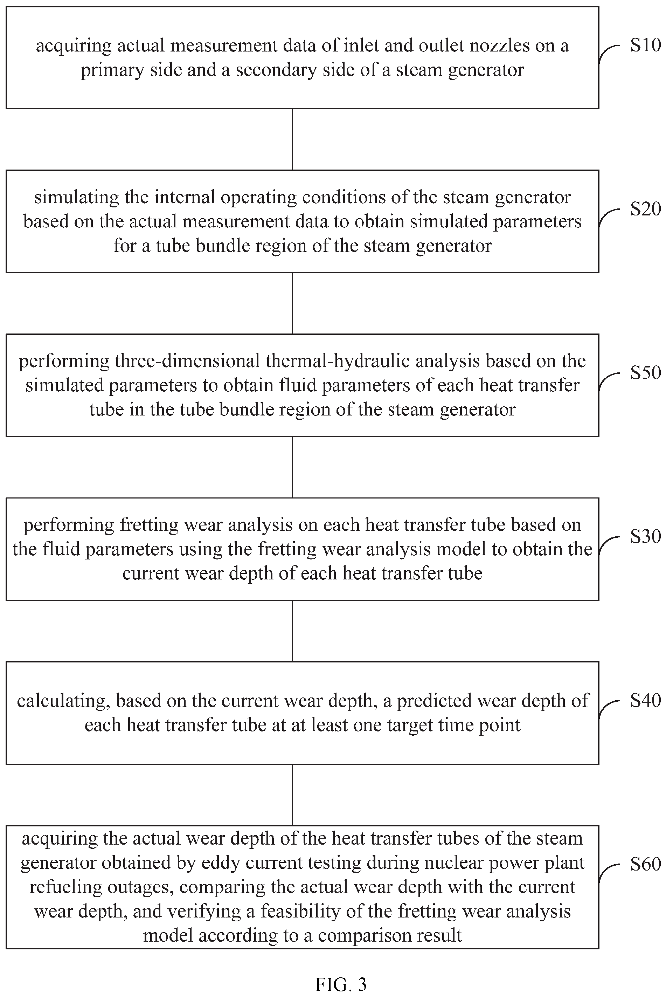

In some embodiments of the method for assisting operation and maintenance of heat transfer tubes of a steam generator, with reference to FIG. 3, after step S30, the method further comprises:
S60, acquiring the actual wear depth of the heat transfer tubes of the steam generator obtained by eddy current testing during a scheduled outage of a nuclear power plant, and comparing the actual wear depth with the current wear depth, and further, verifying feasibility of the fretting wear analysis model according to a comparison result.

It can be understood that when the comparison result exceeds a preset deviation range, configuration parameters of the fretting wear analysis model are adjusted, and step S30 is executed again until the comparison result is within the preset deviation range, and then adjustment of the configuration parameters is stopped, and execution of step S30 is also stopped. Specifically, the configuration parameters include, but are not limited to, boundary conditions, added mass, damping ratio of the heat transfer tube, etc., and the boundary conditions include a support state value and/or a gap value of the heat transfer tube. Of course, the preset deviation range may be 0, that is, the preset deviation range may require that the current wear depth is consistent with the actual wear depth obtained by eddy current detection.

In this embodiment, since the heat transfer tubes are supported by multiple layers of tube support plates and multiple sets of anti-vibration bars, and the final state of tube support plates and anti-vibration bars after manufacturing and assembly is not completely consistent with the theoretical model, and after manufacturing completion it is impossible to inspect and confirm dense tube bundles and internal structures, therefore when the comparison result exceeds the preset deviation range, boundary conditions such as tube support state and gap values of the heat transfer tubes, as well as configuration parameters such as added mass and damping ratio in the fretting wear analysis model are adjusted, and step S30 is re-executed. Through big data analysis technology, an empirical model consistent with actual vibration characteristics and wear characteristics during service of the heat transfer tubes is trained, so as to realize intelligent fault diagnosis and fault warning of the heat transfer tubes.

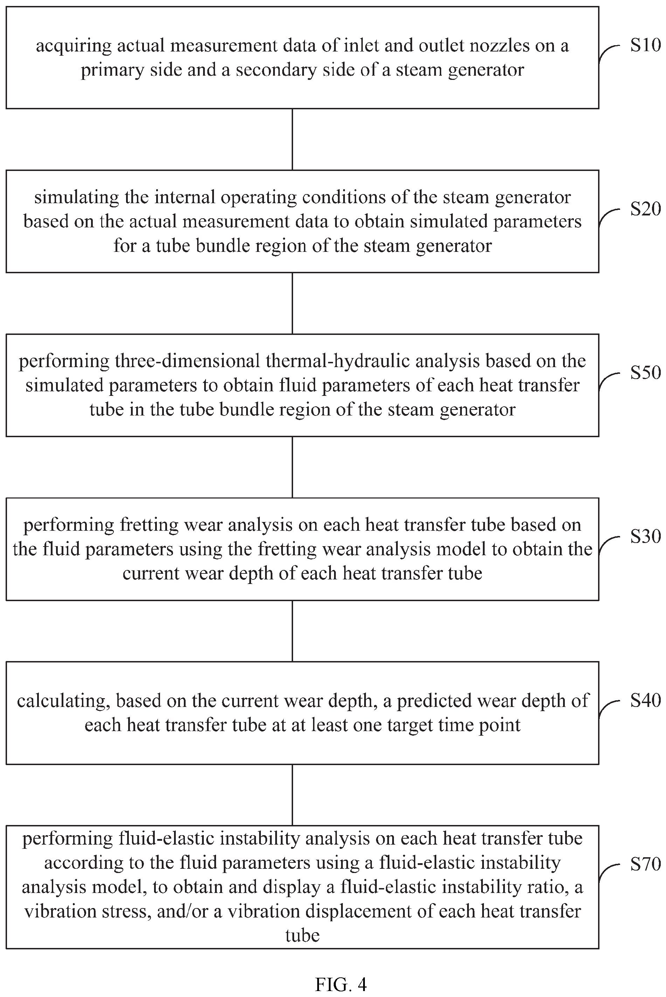

In some embodiments of the method for assisting operation and maintenance of heat transfer tubes of a steam generator, with reference to FIG. 4, the method further comprises:
S70, performing, according to the fluid parameters, fluid-elastic instability analysis on each heat transfer tube based on a fluid-elastic instability analysis model, to obtain a fluid-elastic instability ratio, vibration stress, and/or vibration displacement of each heat transfer tube and displaying the same.

It can be understood that dynamic characteristic modeling analysis is performed on each heat transfer tube according to geometric structure, material properties, and support positions of support plates and anti-vibration bars of each heat transfer tube, thereby obtaining dynamic characteristics of each heat transfer tube. In addition, based on the fluid-elastic instability analysis model, parameters such as fluid velocity and density along the tube length direction of each heat transfer tube are used as input parameters of flow-induced vibration, and according to the dynamic characteristics, fluid-elastic instability analysis is performed on each heat transfer tube, thereby obtaining fluid-elastic instability ratio, vibration stress, and vibration displacement of each heat transfer tube. Wherein the dynamic characteristics include vibration frequency and vibration mode shape, etc. That is, before performing fluid-elastic instability analysis, dynamic characteristic analysis is first performed on each heat transfer tube to obtain intrinsic characteristics such as vibration frequency and vibration mode shape.

This embodiment enables more accurate tracking of service behavior of each heat transfer tube by performing fluid-elastic instability analysis on all heat transfer tubes in the steam generator, thereby realizing fault diagnosis, health status prediction, and intelligent operation and maintenance of the steam generator.

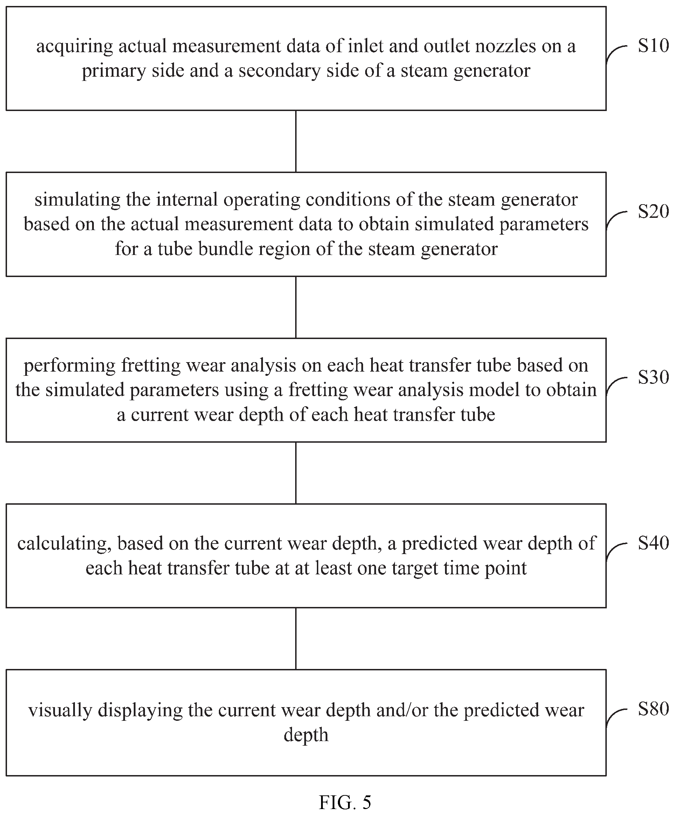

Optionally, in some embodiments, with reference to FIG. 5, the method further comprises: S80, visually displaying the current wear depth and/or the predicted wear depth. In this embodiment, key results obtained by analysis, such as current wear depth, predicted wear depth, fluid-elastic instability ratio, vibration stress, vibration displacement, etc., are visually displayed, thereby enabling more intuitive intelligent operation and maintenance.

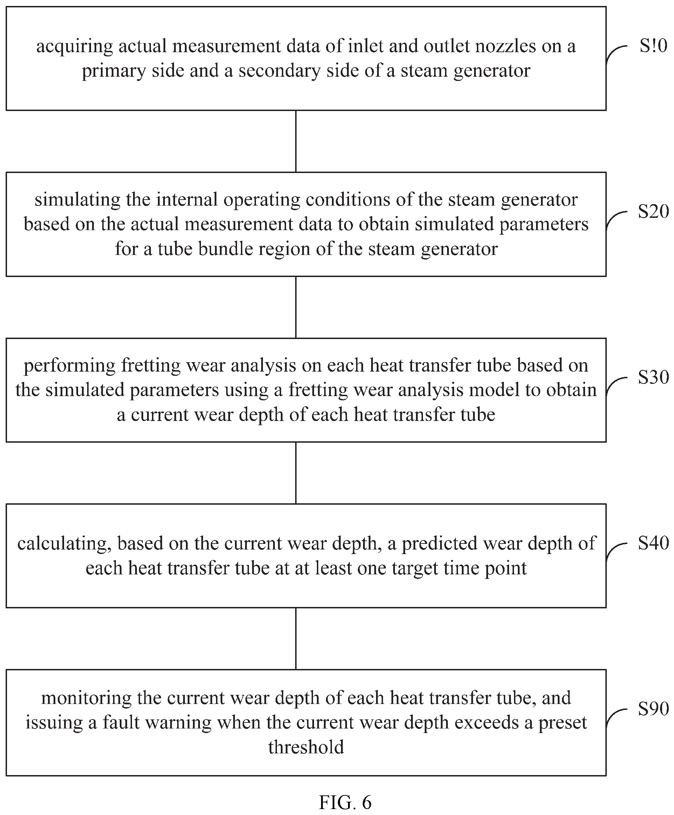

Optionally, in some embodiments, with reference to FIG. 6, the method further comprises: S90, monitoring the current wear depth of each heat transfer tube, and issuing a fault warning when the current wear depth exceeds a preset threshold.

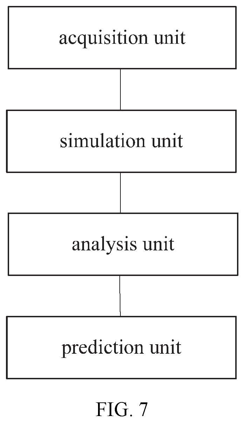

In another preferred embodiment, with reference to FIG. 7, the system for assisting operation and maintenance of heat transfer tubes of a steam generator according to the present embodiment comprises:
an acquisition unit, configured to acquire actual measurement data of inlet and outlet nozzles on a primary side and a secondary side of a steam generator;
a simulation unit, configured to simulate internal operating conditions of the steam generator according to the actual measurement data to obtain simulated parameters for the tube bundle region of the steam generator;
an analysis unit, configured to perform fretting wear analysis on each heat transfer tube based on a fretting wear analysis model according to the simulated parameters, thereby obtaining a current wear depth of each heat transfer tube;
a prediction unit, configured to calculate, based on the current wear depth, a predicted wear depth of each heat transfer tube corresponding to at least one target time point; wherein obtaining the predicted wear depth is equivalent to obtaining a life prediction condition of the heat transfer tube.

In this embodiment, by analyzing fretting wear of all heat transfer tubes in the steam generator, the present application enables the prediction of wear depth of each heat transfer tube at different target time points, thereby enabling tracking of service behavior of each heat transfer tube and remaining life prediction.

In another preferred embodiment, a computer-readable storage medium according to the present embodiment stores a computer program, wherein the computer program is adapted to be loaded by a processor to execute the steps of the heat transfer tube bundle operation and maintenance assisting method as described above.

In this embodiment, by analyzing fretting wear of all heat transfer tubes in the steam generator, the present application enables the prediction of wear depth of each heat transfer tube at different target time points, thereby enabling tracking of service behavior of each heat transfer tube and remaining life prediction.

In another preferred embodiment, a computer device according to the present embodiment comprises a memory and a processor, wherein the memory stores a computer program, and the processor executes the steps of the heat transfer tube bundle operation and maintenance assisting method as described above by invoking the computer program stored in the memory.

In this embodiment, by analyzing fretting wear of all heat transfer tubes in the steam generator, the present application enables the prediction of wear depth of each heat transfer tube at different target time points, thereby enabling tracking of service behavior of each heat transfer tube and remaining life prediction.

It should be noted that the computer-readable storage medium of the present application may be a USB flash drive, a mobile hard disk, a read-only memory (ROM), a magnetic disk, an optical disk, or any other computer-readable storage medium capable of storing program code.

The processor of the present application is used to provide computing and control capabilities to support operation of the entire system for assisting operation and maintenance of the heat transfer tube bundle of the steam generator. It should be understood that in the embodiments of the present application, the processor may be a central processing unit (CPU), and may also be other general-purpose processors, a digital signal processor (DSP), an application specific integrated circuit (ASIC), a field-programmable gate array (FPGA), or other programmable logic devices, discrete gate or transistor logic devices, or discrete hardware components. The general-purpose processor may be a microprocessor, or any conventional processor, etc.

Those skilled in the art may further appreciate that, in combination with the units and algorithm steps described in the embodiments disclosed herein, the present application may be implemented in the form of electronic hardware, computer software, or a combination thereof. In order to clearly illustrate the interchangeability between hardware and software, the components and steps of the embodiments have been generally described in terms of their functions in the above description. Whether such functions are implemented in hardware or software depends on the specific application and design constraints of the technical solution. Those skilled in the art may use different methods for each specific application to implement the described functions, but such implementations shall not be considered as departing from the scope of the present application.

The steps of a method or algorithm described in connection with the embodiments disclosed herein may be implemented directly in hardware, in software modules executed by a processor, or in a combination thereof. The software modules may be stored in random access memory (RAM), memory, read-only memory (ROM), electrically programmable ROM, electrically erasable programmable ROM, registers, hard disk, removable disk, CD-ROM, or any other form of storage medium known in the technical field.

It can be understood that the above embodiments merely represent preferred implementations of the present application, and the description thereof is relatively specific and detailed, but should not be construed as limiting the scope of the present patent application. It should be noted that those skilled in the art may, without departing from the inventive concept of the present application, freely combine the above technical features and make various modifications and improvements, which shall all fall within the protection scope of the present application. Therefore, any equivalent substitutions and modifications made within the scope of the claims of the present application shall fall within the scope of the claims of the present application.

## Claims

1. A method for assisting operation and maintenance of heat transfer tubes of a steam generator, **characterized by** comprising the following steps:
S10, acquiring actual measurement data of inlet and outlet nozzles on a primary side and a secondary side of a steam generator;
S20, simulating the internal operating conditions of the steam generator based on the actual measurement data to obtain simulated parameters for a tube bundle region of the steam generator;
S30, performing fretting wear analysis on each heat transfer tube based on the simulated parameters using a fretting wear analysis model to obtain a current wear depth of each heat transfer tube; and
S40, calculating, based on the current wear depth, a predicted wear depth of each heat transfer tube at at least one target time point.

2. The method for assisting operation and maintenance of heat transfer tubes of a steam generator according to claim 1, **characterized in that**, after step S20 and before step S30, the method further comprises:
S50, performing three-dimensional thermal-hydraulic analysis based on the simulated parameters to obtain fluid parameters of each heat transfer tube in the tube bundle region of the steam generator;
step S30 comprises:
performing fretting wear analysis on each heat transfer tube based on the fluid parameters using the fretting wear analysis model to obtain the current wear depth of each heat transfer tube.

3. The method for assisting operation and maintenance of heat transfer tubes of a steam generator according to claim 2, **characterized in that**, after step S30, the method further comprises:
S60, acquiring the actual wear depth of the heat transfer tubes of the steam generator obtained by eddy current testing during nuclear power plant refueling outages, comparing the actual wear depth with the current wear depth, and verifying a feasibility of the fretting wear analysis model according to a comparison result.

4. The method for assisting operation and maintenance of heat transfer tubes of a steam generator according to claim 3, **characterized in that**, step S30 further comprises:
presetting a fretting wear analysis model for each heat transfer tube, and performing fretting wear analysis on the corresponding heat transfer tube according to the fluid parameters of each heat transfer tube, to obtain the current wear depth of each heat transfer tube.

5. The method for assisting operation and maintenance of heat transfer tubes of a steam generator according to claim 4, **characterized in that**, step S60 further comprises:
when the comparison result exceeds a preset deviation range, adjusting configuration parameters of the fretting wear analysis model and re-executing step S30 until the comparison result falls within the preset deviation range, whereupon adjustment of the configuration parameters is stopped.

6. The method for assisting operation and maintenance of heat transfer tubes of a steam generator according to claim 5, **characterized in that**, the configuration parameters comprise at least one of a boundary condition, an added mass, and a damping ratio of the heat transfer tube, wherein the boundary condition comprise a support state value and/or a gap value of the heat transfer tube.

7. The method for assisting operation and maintenance of heat transfer tubes of a steam generator according to claim 2, **characterized in that**, step S30 further comprises:
performing dynamic characteristic modeling analysis on the heat transfer tubes according to a geometric structure, a material property and the support positions of a tube support plate and an anti-vibration bar of each heat transfer tube, to obtain dynamic characteristics of each heat transfer tube; and performing fretting wear analysis on each heat transfer tube based on the dynamic characteristics and the fluid parameters using the fretting wear analysis model to obtain the current wear depth of each heat transfer tube;
wherein the dynamic characteristics comprise a vibration frequency and/or a vibration mode shape.

8. The method for assisting operation and maintenance of heat transfer tubes of a steam generator according to claim 2, **characterized in that**, the method further comprises:
S70, performing fluid-elastic instability analysis on each heat transfer tube according to the fluid parameters using a fluid-elastic instability analysis model, to obtain and display a fluid-elastic instability ratio, a vibration stress, and/or a vibration displacement of each heat transfer tube.

9. The method for assisting operation and maintenance of heat transfer tubes of a steam generator according to claim 2, **characterized in that**, step S50 comprises:
according to the simulated parameters, performing, in the three-dimensional thermal-hydraulic analysis model, mass conservation, momentum conservation, and energy conservation calculations for the secondary side of the tube bundle region, and performing an energy conservation calculation for the primary side of the tube bundle region, to obtain a heat transfer between the primary side and the secondary side through a surface of the heat transfer tubes; and calculating, according to the heat transfer and in combination with a position of each heat transfer tube, the fluid parameters of each heat transfer tube along a tube length direction in the tube bundle region of the steam generator;
wherein the fluid parameters comprise a fluid velocity and/or a fluid density.

10. The method for assisting operation and maintenance of heat transfer tubes of a steam generator according to claim 1, **characterized in that**, step S20 comprises:
performing a real-time simulation of the internal operating conditions of the steam generator according to the actual measurement data to obtain simulated parameters for the tube bundle region of the steam generator;
wherein the actual measurement data comprise at least one of a flow rate, a pressure, and a temperature of the inlet and outlet nozzles on the primary side and the secondary side of the steam generator; the simulated parameters comprise at least one of a flow rate at a bottom inlet of the tube bundle region, an enthalpy at the bottom inlet of the tube bundle region, a temperature at the bottom inlet of the tube bundle region, an outlet pressure of a shroud top cover, an inlet temperature of the primary side of the heat transfer tube, and an inlet flow rate of the primary side of the heat transfer tube; and the tube bundle region is a region enclosed by a secondary side surface of a tube sheet, a shroud, and the shroud top cover, the region including the heat transfer tubes, support plates, and anti-vibration bars.

11. The method for assisting operation and maintenance of heat transfer tubes of a steam generator according to claim 1, **characterized in that**, the method further comprises:
S80, visually displaying the current wear depth and/or the predicted wear depth.

12. The method for assisting operation and maintenance of heat transfer tubes of a steam generator according to claim 1 or 2, **characterized in that**, the method further comprises:
S90, monitoring the current wear depth of each heat transfer tube, and issuing a fault warning when the current wear depth exceeds a preset threshold.

13. A system for assisting operation and maintenance of heat transfer tubes of a steam generator, **characterized by** comprising:
an acquisition unit configured to acquire actual measurement data of inlet and outlet nozzles on a primary side and a secondary side of a steam generator;
a simulation unit configured to simulate the internal operating conditions of the steam generator according to the actual measurement data to obtain simulated parameters for the tube bundle region of the steam generator;
an analysis unit configured to perform fretting wear analysis on each heat transfer tube based on the simulated parameters using a fretting wear analysis model, thereby obtaining the current wear depth of each heat transfer tube; and
a prediction unit configured to calculate, based on the current wear depth, the predicted wear depth of each heat transfer tube at at least one target time point.

14. A computer-readable storage medium, **characterized in that** the computer-readable storage medium stores a computer program, the computer program being adapted to be loaded by a processor to perform the steps of the method for assisting operation and maintenance of heat transfer tubes of a steam generator according to any one of claims 1 to 12.

15. A computer device, **characterized by** comprising a memory and a processor, wherein the memory stores a computer program, and the processor is configured to execute, by invoking the computer program stored in the memory, the steps of the method for assisting operation and maintenance of heat transfer tubes of a steam generator according to any one of claims 1 to 12.
